# EUROPEAN PATENT SPECIFICATION

(11) **EP 3 338 922 B1**
(45) Date of publication and mention of the grant of the patent: **30.10.2019**
(21) Application number: 16206839.9
(22) Date of filing: 23.12.2016
(51) Int. Cl.: B23B 41/00

(54) **DEVICE FOR DRILLING HOLES IN A BLADE ROOT OF A WIND TURBINE AND METHOD FOR CHANGING THE MODE OF SUCH A DEVICE**
VORRICHTUNG ZUM BOHREN VON LÖCHERN IN EINEM SCHAUFELFUSS EINER WINDTURBINE UND VERFAHREN ZUR BETRIEBSARTSUMSCHALTUNG EINER SOLCHEN VORRICHTUNG
DISPOSITIF PERMETTANT DE FORER DES TROUS DANS UNE EMPLANTURE DE PALE D'UNE ÉOLIENNE ET MÉTHODE POUR CHANGER LE MODE D'UN TEL DISPOSITIF

(43) Date of publication of application: 27.06.2018
(73) Proprietor: Kooyen Holding B.V., 7683 RR Den Ham (NL)
(72) Inventor: Boksem, Cornelis, 7683 RR Den Ham (NL)
(74) Representative: Mink-Lindenburg, Charlotte Hildegard

(56) References cited:
- DE-U1- 8 134 140
- US-A- 4 696 197

## Description

The invention relates to a device for drilling holes in a blade root of a wind turbine, wherein the device comprises:
- a first base, which is to be stationary positioned on the ground;
- a second base, which is moveably mounted to the first base and movable along a straight first direction;
- first drive means for positioning the second base along the first direction;
- a rotary arm, wherein in a first, operating, mode of the device, the rotary arm is pivotally mounted to the second base around a main axis;
- second drive means for rotating the rotary arm around the main axis;
- drilling means mounted on the rotary arm for drilling holes in the blade root.

Such a device is known in the state of the art. An example of a device according to the preamble is described in the Chinese patent application CN203044956U. The known device is used for drilling holes in axial and radial direction of the blade root for accommodation of T-bolts. The T-bolts are used for connecting the (rotor) blade to a hub of the wind turbine. The device is also used for face milling the blade root. Therefore, the known device also includes face milling means arranged on the rotary arm.

The device according to the preamble is big and heavy and therefore difficult to transport. The device according to the preamble is too big to transport in a complete assembled condition. Before transportation of the device, the device has therefore to be disassembled whereby the rotary arm is removed from the second base. At the installation site, the rotary arm is then attached to the second base. Attaching the rotary arm to the second base is due to the size and weight of the arm difficult and especially at an installation site, which is often not properly equipped for this kind of operation.

It is an aim of the invention to provide an improved device according to the preamble.

The device according to the invention has a second, transport, mode wherein the rotary arm extends approximately parallel to the first base. In this transport mode, the height of the device is reduced, which makes the device easier to transport. Advantageously the rotary arm does not have to be removed when the device is transported.

A device according to the preamble of claim 1 is known from DE8134140U1.

The device according to the invention comprises the features of claim 1, it is characterized in that the second base comprises a frame, which frame comprises a first frame part, which first frame part is positioned substantially parallel to the first base, and a second frame part which is connected to the first frame part, which second frame part is arranged for receiving the rotary arm. In the first mode of the device the second frame part is substantially perpendicular attached to the first frame part. In the transport mode, the second frame part is substantially parallel to the first frame part. The frame can also comprise a support frame part to support the second frame part on the first frame part.

For transition from operating mode to transport mode and vice versa the second frame part is preferably pivotally mounted to the first frame part. In particular, the second frame part is connected to the first frame part using hinges.

The invention also relates to a method for changing the mode of a device from the operation mode to the transport mode. The method according to the invention comprises the following steps:
step a): moving the second base near the start position;
step b): positioning a crane above the second frame part;
step b): attaching a hoist rope of the crane to an upper part of the second frame part;
step c): tensioning the hoist rope;
step d): removing any third frame part from the device;
step e): moving the second base towards the end position until the angle between second frame part and first frame part is smaller than 80°;
step f): lowering the hoist rope of the crane and pivoting the second frame part around the first frame part, such that the rotary arm extends approximately parallel to the first base.

It has been experimentally found that the device according to the invention needs to be carefully changed from operation mode to transport mode. This is due to the heavy rotary arm, which causes the device to have a high centre of gravity. When the third frame parts have been removed, it is necessary to exert a large force on the rotary arm or second frame part to pivot the second frame part. When the angle between second frame part and first frame part is smaller than 80°, the rotary arm (and the second frame part) will collapse to the first frame part, causing a shock force acting on the hoist rope of the crane, which can lead to dangerous situations.
In order to prevent such a shock force, the invention provides the above method for changing the mode of a device from the operation mode to the transport mode.

The invention will now be described in more detail by the following figures, wherein:
Figure 1 shows a side view of the preferred embodiment of the device according to the invention in first, operating, mode;
Figure 2 shows the device according to Figure 1 in second, transport, mode;
Figure 3 shows a detailed view of the device according to Figure 1 in transport mode at the position of the hinges;
Figure 4 shows another view of the device according to Figure 1 in second, transport, mode.

The same components are designated in the different figures with the same reference numerals.

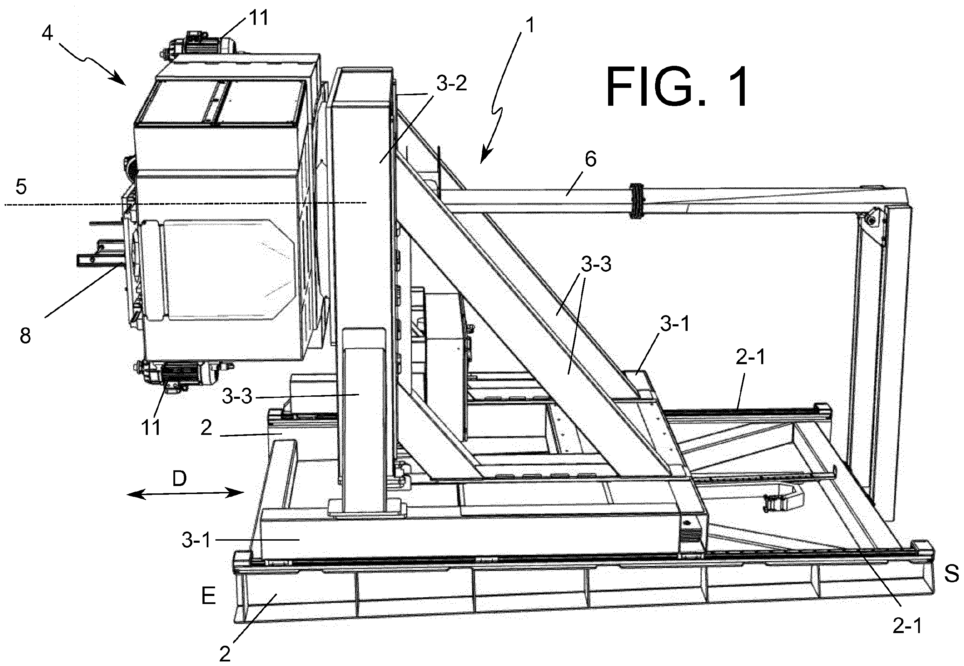

Figure 1 shows a side view of the preferred embodiment of the device 1 according to the invention in first, operating, mode. The device 1 is used for drilling holes in the axial and radial direction of a blade root of a wind turbine. The blade nor the blade root is shown in this figure. The device 1 is fixed on the ground through a first base 2. First base 2 is attached to the (concrete) ground with known fixing means, like a bolt-nut connection. On first base 2, a second base, is moveably mounted to the first base 2 and movable along a straight first direction D. The second base comprises a frame, which frame comprises a first frame part 3-1, second frame part 3-2 and optionally third frame part 3-3. The first frame part 3-1 is positioned substantially parallel to the first base 2. The second frame part 3-2 is arranged for receiving the rotary arm 4. In the first mode of the device 1 the second frame part 3-2 is substantially perpendicular attached to the first frame part 3-1. Third frame part 3-3 can be installed to secure frame part 3-2 to frame part 3-1. To keep second base on the first direction, tracks 2-1 are installed on first base 3. The device 1 comprises first drive means (not shown) for positioning second base along the first direction D. The first drive means preferably comprises an electric motor. A rotary arm 4 is pivotally mounted to the second base around a main axis 5. The main axis 5 is substantially parallel to the first direction D. The rotary arm 4 is rotatable in a plane perpendicular to the first direction D. It is apparent that the device 1 comprises second drive means for rotating the rotary arm 4 around the main axis 5. The second drive means are located on the second base near the rotary arm 4 around main axis 5 and are not visible in this figure. On rotary arm 4 drilling means 8 are mounted for drilling holes in the blade root. The device 1 can also be used for face milling the blade root. Therefore, the device 1 can be fitted with face milling means 11, which can be arranged on multiple sides of the rotary arm 4.

The device 1 can further comprise a suction pipe 6, which is located in the extension of axis 5. The suction pipe 6 is used for discharging of waste material during the drilling of the holes.

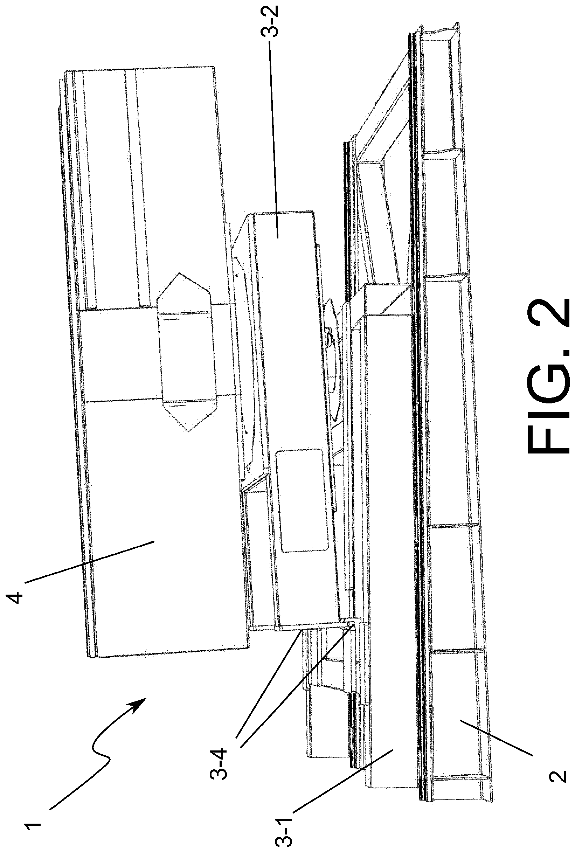

Figure 2 shows the device 1 according to Figure 1 in second, transport, mode. In the second mode, the rotary arm 4 is approximately parallel to the first base 2. The second frame part 3-2 is pivotally mounted to the first frame part 3-1, preferably by hinges 3-4. Typically, third frame parts 3-3 are secured to the first frame part 3-1 and second frame part 3-2 by a bolt and nut connection. When device 1 has to be in transport mode, the third frame parts 3-3 and suction pipe 6 are removed from the second base. When third frame parts 3-3 are removed, the second frame part 3-2 and rotary arm are pivoted toward the first frame part 3-1, preferably using a crane.

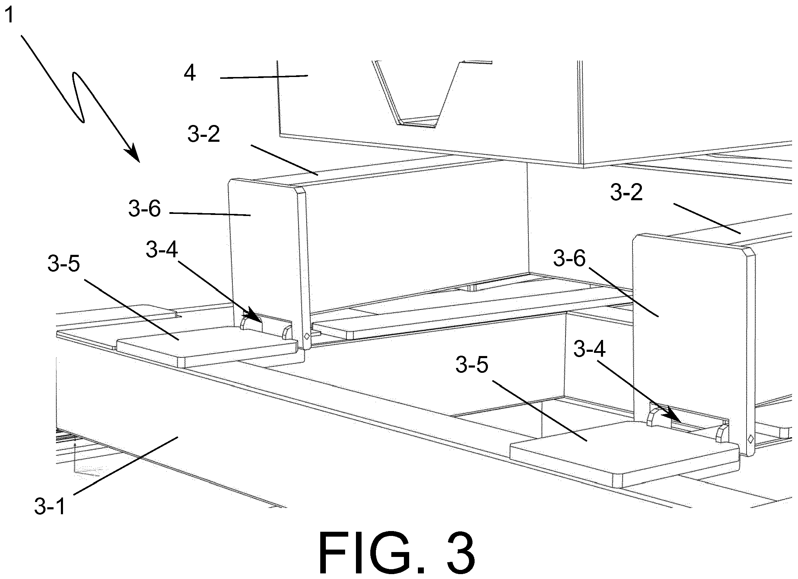

Figure 3 shows a detailed view of the device 1 according to Figure 1 in transport mode at the position of the hinges 3-4, which are used to connect first frame part 3-1 to second frame part 3-2. First frame part 3-1 and second frame part 3-2 are respectively provided with plate members 3-5 and 3-6. Plate member 3-5 is pivotably connected to plate member 3-6 by hinge 3-4.

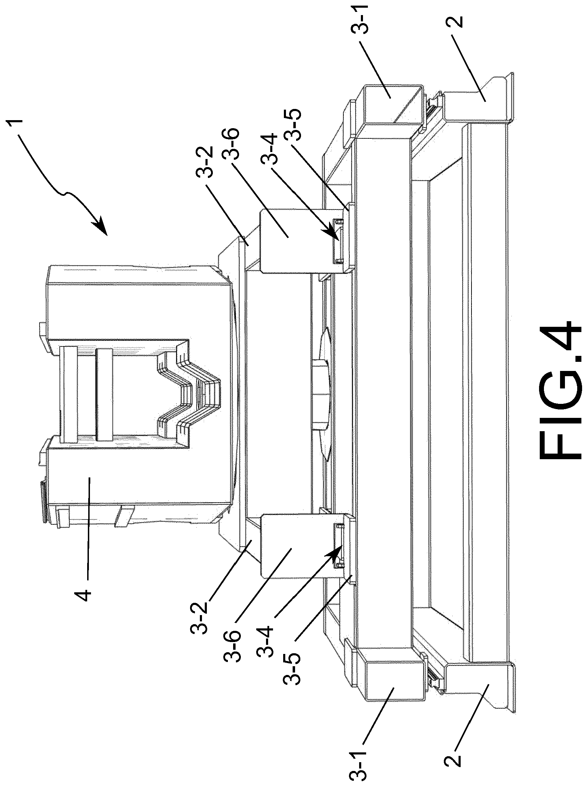

Figure 4 shows another view of the device 1 according to Figure 1 in second, transport, mode. In transport mode, the lengthwise direction of the rotary arm 4 is substantially parallel to the lengthwise direction of the first frame 2.

In all figures the drilling means 8 are not clearly shown or have been omitted. The drilling means 8 can be positioned are any position on the rotary arm 4. The position of the drilling means 8 on rotary arm 4 are however not relevant for explanation of the invention.

The invention is of course not limited to the described and shown preferred embodiment but extends to any embodiment falling within the scope of protection as defined in the claims and as seen in the light of the foregoing description and accompanying drawings.

## Claims

1. Device (1) for drilling holes in a blade root of a wind turbine, wherein the device (1) comprises:
- a first base (2), which is to be stationary positioned on the ground;
- a second base, which is moveably mounted to the first base (2) and movable along a first direction (D);
- first drive means for positioning the second base along the first direction (D);
- a rotary arm (4), wherein in a first, operating, mode of the device (1), the rotary arm (4) is pivotally mounted to the second base around a main axis (5);
- second drive means for rotating the rotary arm (4) around the main axis (5);
- drilling means (8) mounted on the rotary arm (4) for drilling holes in the blade root;
wherein the device (1) has a second, transport, mode wherein the rotary arm (4) extends approximately parallel to the first base (2), **characterized in that** the second base comprises a frame, which frame comprises a first frame part (3-1), which first frame part (3-1) is positioned substantially parallel to the first base (2), and a second frame part (3-2), which second frame part (3-2) is arranged for receiving the rotary arm (4) and in the first mode of the device (1) is substantially perpendicular attached to the first frame part (3-1) and in the transport mode substantially parallel to the first frame part (3-1).

2. Device (1) according to claim 1, wherein in transition from operating mode to transport mode and vice versa the second frame part (3-2) is pivotally mounted to the first frame part (3-1).

3. Device (1) according to claim 2, wherein the second frame part (3-2) is connected to the first frame part (3-1) using hinges.

4. Method for changing the mode of a device (1) according to the claims 2 or 3 from the operation mode to the transport mode, comprising the following steps:
step a): moving the second base near the start position (S);
step b): positioning a crane above the second frame part (3-2);
step b): attaching a hoist rope of the crane to an upper part of the second frame part 3-2;
step c): tensioning the hoist rope;
step d): removing any third frame part (3-3) from the device (1);
step e): moving the second base towards the end position (E) until the angle between second frame part (3-2) and first frame part (3-)1 is smaller than 80°;
step f): lowering the hoist rope of the crane and pivoting the second frame part (3-2) around the first frame part (3-1), such that the rotary arm (4) is approximately parallel to the first base (2).

## Patentansprüche

1. Vorrichtung (1) zum Bohren von Löchern in einen Schaufelfuß einer Windturbine, wobei die Vorrichtung (1) umfasst:
- eine erste Basis (2), die stationär auf dem Boden positionierbar ist;
- eine zweite Basis, die beweglich an der ersten Basis (2) befestigt und in einer ersten Richtung (D) beweglich ist;
- erste Antriebsmittel zum Positionieren der zweiten Basis in der ersten Richtung (D);
- einen Dreharm (4), der in einem ersten Zustand (Betriebsmodus) der Vorrichtung (1) schwenkbar um eine Hauptachse (5) zu der zweiten Basis (3) gelagert ist,
- zweite Antriebsmittel zum Schwenken des Dreharms (4) um die Hauptachse (5);
- Bohrmittel (8), die an dem Dreharm (4) angebracht sind zum Bohren der Löcher in den Schaufelfuß;
wobei die Vorrichtung (1) einen zweiten Zustand aufweist (Transportmodus), in dem sich der Dreharm (4) näherungsweise parallel zu der ersten Basis (2) erstreckt, **dadurch gekennzeichnet, dass** die zweite Basis einen Rahmen umfasst, wobei der Rahmen ein erstes Rahmenteil (3-1) aufweist, das im Wesentlichen parallel zur ersten Basis (2) angeordnet ist, und ein zweites Rahmenteil (3-2), das zur Aufnahme des Dreharms (4) ausgestaltet ist, wobei das zweite Rahmenteil (3-2) im ersten Zustand (Betriebsmodus) der Vorrichtung (1) im Wesentlichen senkrecht angeordnet ist zum ersten Rahmenteil (3-1) und wobei das zweite Rahmenteil (3-2) im zweiten Zustand (Transportmodus) im Wesentlichen parallel angeordnet ist zum ersten Rahmenteil (3-1).

2. Vorrichtung (1) nach Anspruch 1, wobei zum Übergang der Vorrichtung vom ersten Zustand (Betriebsmodus) in den zweiten Zustand (Transportmodus) und umgekehrt das zweite Rahmenteil (3-2) schwenkbar am ersten Rahmenteil (3-1) befestigt ist.

3. Vorrichtung (1) nach Anspruch 2, wobei das zweite Rahmenteil (3-2) mit dem ersten Rahmenteil (3-1) unter Nutzung von Drehgelenken verbunden ist.

4. Verfahren zu Änderung des Betriebsmodus einer Vorrichtung (1) entsprechend einem der Ansprüche 2 oder 3 vom ersten Zustand (Betriebsmodus) in den zweiten Zustand (Transportmodus), umfassen die folgenden Verfahrensschritte:
step (a): Bewegen der zweiten Basis in die Nähe der Startposition (S);
step (b): Bewegen eines Kranes über das zweite Rahmenteil (3-2);
step (b): Anbringen eines Hubseils des Kranes an einem oberen Teil des zweiten Rahmenteils (3-2);
step (c): Spannen des Hubseils;
step (d): Entfernen eventuell vorhandener dritter Rahmenteile (3-3) von der Vorrichtung (1);
step (e): Bewegen der zweiten Basis in Richtung der Endposition (E), bis der Winkel zwischen dem zweiten Rahmenteil (3-2) und dem ersten Rahmenteil (3-1) kleiner ist als 80°;
step (f): Absenken des Hubseils des Kranes und Schwenken des zweiten Rahmenteils (3-2) um das erste Rahmenteil (3-1), so dass der Dreharm (4) näherungsweise parallel zur ersten Baia (2) orientiert ist.

## Revendications

1. Dispositif (1) pour percer des trous dans l'emplanture d'une pale d'éolienne, dans lequel le dispositif (1) comprend :
- une première base (2) qui doit être stationnaire au sol ;
- une deuxième base qui est montée mobile sur la première base (2) et qui est mobile dans une première direction (D) ;
- un premier moyen d'entraînement pour positionner la deuxième base dans la première direction (D) ;
- un bras rotatif (4), ledit bras rotatif (4) étant, dans un premier mode de fonctionnement du dispositif (1), monté sur la deuxième base pivotant autour d'un axe principal (5) ;
- un deuxième moyen d'entraînement pour faire tourner le bras rotatif (4) autour de l'axe principal (5) ;
- des moyens de perçage (8) montés sur le bras rotatif (4) pour percer des trous dans l'emplanture de pale ;
le dispositif (1) ayant un deuxième mode de transport, le bras rotatif (4) s'étendant approximativement parallèlement à la première base (2), **caractérisé en ce que** la deuxième base comprend un cadre, lequel cadre comprend une première partie de cadre (3-1), laquelle première partie de cadre (3-1) est positionnée sensiblement parallèlement à la première base (2), et une deuxième partie de cadre (3-2), laquelle deuxième partie de cadre (3-2) est disposée pour recevoir le bras rotatif (4) et est fixée, dans le premier mode du dispositif (1), sensiblement perpendiculairement à la première partie de cadre (3-1) et, dans le mode de transport, sensiblement parallèlement à la première partie de cadre (3-1).

2. Dispositif (1) selon la revendication 1, dans lequel, lors du passage du mode de fonctionnement au mode de transport, et vice versa, la deuxième partie de cadre (3-2) est montée pivotante sur la première partie de cadre (3-1).

3. Dispositif (1) selon la revendication 2, dans lequel la deuxième partie de cadre (3-2) est reliée à la première partie de cadre (3-1) par des charnières.

4. Procédé pour changer le mode d'un dispositif (1) selon les revendications 2 ou 3 pour passer du mode de fonctionnement au mode de transport, comprenant les étapes suivantes :
étape a) : déplacement de la deuxième base près de la position de départ (S) ;
étape b) : positionnement d'une grue au-dessus de la deuxième partie du cadre (3-2) ;
étape b) : fixation d'un câble de levage de la grue à une partie supérieure de la deuxième partie du cadre (3-2) ;
étape c) : mise sous tension du câble de levage ;
étape d) : enlèvement de toute troisième partie de cadre (3-3) du dispositif (1) ;
étape e) : déplacement de la deuxième base vers la position finale (E) jusqu'à ce que l'angle entre la deuxième partie de cadre (3-2) et la première partie de cadre (3-1) soit inférieur à 80 ;
étape f) : descente du câble de levage de la grue et pivotement de la deuxième partie de cadre (3-2) autour de la première partie de cadre (3-1), de sorte que le bras rotatif (4) soit approximativement parallèle à la première base (2).
